# EUROPEAN PATENT APPLICATION

(11) **EP 2 924 933 A1**
(43) Date of publication of application: **30.09.2015**
(21) Application number: 15156022.4
(22) Date of filing: 20.02.2015
(51) Int. Cl.: H04L 12/825, H04L 12/835

(54) **Data reception apparatus, method for controlling data reception apparatus, and data transmission and reception system including data transmission apparatus and data reception apparatus**

(30) Priority: 26.03.2014 JP 2014064826
(71) Applicant: FUJITSU LIMITED, Kawasaki-shi, Kanagawa 211-8588 (JP)
(72) Inventor: Kase, Masaru, Kawasaki-shi, Kanagawa 211-8588 (JP); Yoshida, Yuki, Kawasaki-shi, Kanagawa 211-8588 (JP)
(74) Representative: Hutchison, James

(57) **Abstract**

A data reception apparatus (3) including a reception unit (32), a calculation unit (42), a determination unit (43) and a notification unit (43). The reception unit (32) receives a transmission announcement announcing transmission of data from a data transmission apparatus (2) that transmits data. The calculation unit (42) calculates a predicted use amount of a reception buffer (31) that stores reception data on the basis of a current use amount of the reception buffer (31) and an advance reservation amount indicating an amount of unreceived data among the data of which the transmission announcement is received that when the transmission announcement is received by the reception unit (32). The determination unit (43) determines whether the predicted use amount calculated by the calculation unit (42) exceeds a predetermined threshold. The notification unit (43) notifies the data transmission apparatus (2) of a stop of data transmission when the determination unit (43) determines that the predicted use amount exceeds the predetermined threshold.

## Description

### [Technical Field]

The embodiment discussed herein is directed to a data reception apparatus, a method for controlling the data reception apparatus, and a data transmission and reception system including a data transmission apparatus and the data reception apparatus.

### [Background Art]

When a data transmission apparatus faster than a data reception apparatus and the data reception apparatus perform data transfer therebetween, the data transfer rate is controlled so that data will not be lost because processing of the data reception apparatus fails to catch up with. Such a control is typically referred to as flow control. The flow control is important when reliable data transfer is needed.

Methods for flow control include one in which the data reception apparatus notifies the data transmission apparatus of the completion of data reception by using an acknowledgement signal (ACK). The data transmission apparatus then determines that subsequent data can be transmitted. This method, however, decreases communication efficiency since the data transmission apparatus waits for ACK before data transmission.

In another method, the data transmission apparatus performs continuous data transmission, assuming that the data reception apparatus has some free space in its buffer. The data reception apparatus responds to the data transmission apparatus to acknowledge the reception of data. If there is no response, the data transmission apparatus retransmits the data. This method is called a sliding window method.

There is a conventional technique for controlling, in an IP network, the acceptance of a new connection on the basis of the amount of resource in use in a path to be used for the new connection, the amount of resource requested by the new connection, and the amount of reserved resource reserved by an advance reservation for that path.

There is a conventional technique in which a network adapter that processes remote requests from a first apparatus to a second apparatus rejects a remote request if a buffer corresponding to the second apparatus is full or the number of remote requests to the second apparatus is greater than a predetermined threshold when the remote request is received.

### [Citation List]

### [Patent Citation]

Patent Document 1: Japanese Laid-open Patent Publication No. 2008-85686
Patent Document 2: Japanese Laid-open Patent Publication No. 2008-86027

### [Summary of Invention]

The sliding window method has a problem that the data reception apparatus can cause a buffer overflow. The sliding window method thus includes measures for retransmitting data dropped by a buffer overflow.

Accordingly, it is desirable to prevent a buffer overflow and dispense data retransmission.

According to an aspect of an embodiment, a data reception apparatus includes a reception unit that receives a transmission announcement announcing transmission of data from a data transmission apparatus that transmits data, a calculation unit that, when the transmission announcement is received by the reception unit, calculates a predicted use amount of a reception buffer that stores reception data, on the basis of a current use amount of the reception buffer and an advance reservation amount indicating an amount of unreceived data among the data of which the transmission announcement is received, a determination unit that determines whether the predicted use amount calculated by the calculation unit exceeds a predetermined threshold, and a notification unit that, when the determination unit determines that the predicted use amount exceeds the predetermined threshold, notifies the data transmission apparatus of a stop of data transmission.

According to another aspect of an embodiment, a method for controlling a data reception apparatus includes receiving a transmission announcement announcing transmission of data from a data transmission apparatus that transmits data, when the transmission announcement is received, calculating a predicted use amount of a reception buffer that stores reception data, on the basis of a current use amount of the reception buffer and an advance reservation amount indicating an amount of unreceived data among the data of which the transmission announcement is received, determining whether the predicted use amount calculated exceeds a predetermined threshold, and when the predicted use amount is determined to exceed the predetermined threshold, notifying the data transmission unit of a stop of data transmission.

According to still another aspect of an embodiment, a data transmission and reception system includes a data transmission apparatus that transmits data and a data reception apparatus that receives the data transmitted by the data transmission apparatus, the data transmission apparatus including a notification unit that notifies the data reception apparatus of a transmission announcement of data before transmitting the data, and a transmission unit that transmits the data of which the transmission announcement is notified by the notification unit, the data reception apparatus including a reception unit that receives the transmission announcement, a calculation unit that, when the transmission announcement is received by the reception unit, calculates a predicted use amount of a reception buffer that stores reception data, on the basis of a current use amount of the reception buffer and an advance reservation amount indicating an amount of unreceived data among the data of which the transmission announcement is received, a determination unit that determines whether the predicted use amount calculated by the calculation unit exceeds a predetermined threshold, and a notification unit that, when the determination unit determines that the predicted use amount exceeds the predetermined threshold, notifies the data transmission unit of a stop of data transmission.

### [Brief Description of Drawings]

FIG. 1 is a diagram illustrating a configuration of a data transmission and reception system according to an embodiment;
FIG. 2 is a timing chart when a data reception apparatus issues a data transmission stop instruction; and
FIG. 3 is a timing chart when the data reception apparatus cancels the data transmission stop instruction.

### [Embodiments for Carrying Out the Invention]

Preferred embodiment of the present invention will be explained with reference to accompanying drawings. The present invention is not limited to the embodiment. Furthermore, the embodiment can be appropriately used in combination as long as the processes do not conflict with each other.

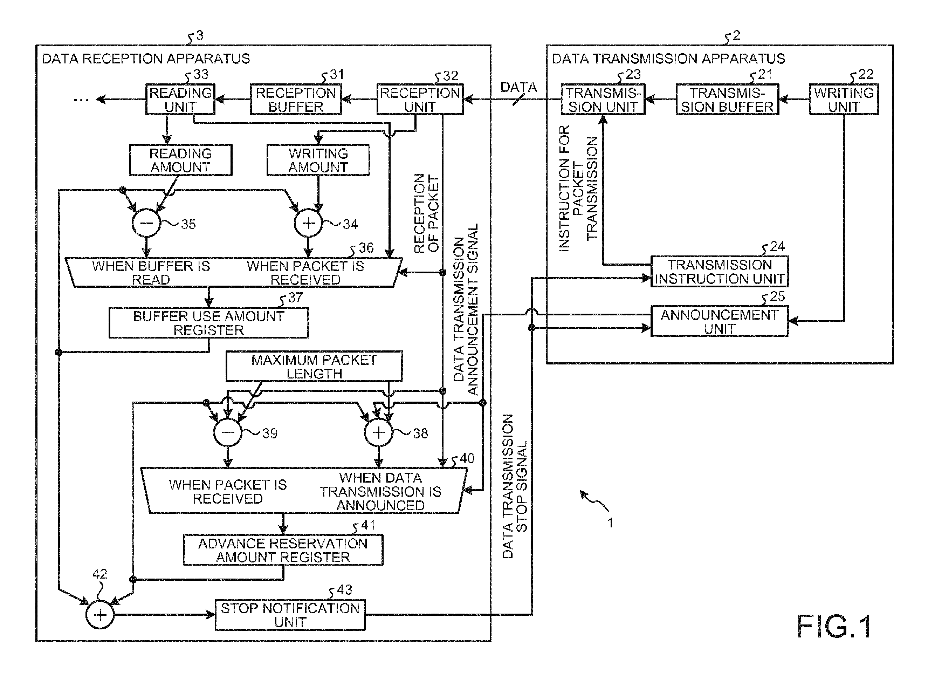

Initially, a configuration of the data transmission and reception system according to the embodiment will be described. FIG. 1 is a diagram illustrating the configuration of the data transmission and reception system according to the embodiment. As illustrated in FIG. 1, a data transmission and reception system 1 includes a data transmission apparatus 2 that transmits data by using packets, and a data reception apparatus 3 that receives the packets transmitted from the data transmission apparatus 2.

An example of the data transmission apparatus 2 is a PCI interface. An example of the data reception apparatus 3 is a CPU module. In another example, the data transmission apparatus 2 and the data reception apparatus 3 are two information processing apparatuses connected via a network.

The data transmission apparatus 2 includes a transmission buffer 21, a writing unit 22, a transmission unit 23, a transmission instruction unit 24, and an announcement unit 25. The transmission buffer 21 is a buffer in which transmission data is temporarily stored.

The writing unit 22 writes the transmission data to the transmission buffer 21. The transmission unit 23 transmits the data in the transmission buffer to the data reception apparatus 3 in the form of packets. If data to be transmitted is prepared and ready for transmission, the transmission instruction unit 24 instructs the transmission unit 23 to transmit a packet. Note that if the transmission instruction unit 24 receives a data transmission stop signal for giving an instruction to stop data transmission from the data reception apparatus 3, the transmission instruction unit 24 issues no transmission instructions. If the data transmission stop signal is cancelled, the transmission instruction unit 24 resumes transmission instructions.

If the writing unit 22 writes at least part of the transmission data to the transmission buffer 21, the announcement unit 25 transmits a data transmission announcement signal for announcing data transmission to the data reception apparatus 3. The transmission of the data transmission announcement signal to the data reception apparatus 3 by the announcement unit 25 enables the data reception apparatus 3 to take measures against a buffer overflow before reception of the packet.

Note that if the announcement unit 25 receives the data transmission stop signal from the data reception apparatus 3, the announcement unit 25 will not transmit the data transmission announcement signal. If the data transmission stop signal is cancelled, the announcement unit 25 resumes transmitting the data transmission announcement signal.

The data reception apparatus 3 includes a reception buffer 31, a reception unit 32, a reading unit 33, addition units 34, 38, and 42, subtraction units 35 and 39, selection units 36 and 40, a buffer use amount register 37, an advance reservation amount register 41, and a stop notification unit 43.

The reception buffer 31 is a buffer in which reception data is temporarily stored. The reception unit 32 receives the packets transmitted from the data transmission apparatus 2 and writes the reception data to the reception buffer 31. When the reception unit 32 receives a packet, the reception unit 32 notifies the selection unit 36 of the reception of the packet. When the reception unit 32 receives the packet, the reception unit 32 also notifies the addition unit 34 of the amount of data written to the reception buffer 31 as a writing amount.

The reading unit 33 reads data from the reception buffer 31. When the reading unit 33 reads data from the reception buffer 31, the reading unit 33 notifies the selection unit 36 of the reading of the data. When the reading unit 33 reads the data from the reception buffer 31, the reading unit 33 also notifies the subtraction unit 35 of the amount of read data as a reading amount.

If the addition unit 34 is notified by the reception unit 32 of the writing amount, the addition unit 34 reads the use amount of the reception buffer 31 from the buffer use amount register 37. The addition unit 34 adds the writing amount to the use amount and outputs the result to the selection unit 36.

If the subtraction unit 35 is notified by the reading unit 33 of the reading amount, the subtraction unit 35 reads the use amount of the reception buffer 31 from the buffer use amount register 37. The subtraction unit 35 subtracts the reading amount from the use amount and outputs the result to the selection unit 36.

If the selection unit 36 is notified by the reception unit 32 of the reception of a packet, the selection unit 36 writes the output of the addition unit 34, i.e., the buffer use amount plus the writing amount to the buffer use amount register 37. On the other hand, if the selection unit 36 is notified by the reading unit 33 of the reading of data, the selection unit 36 writes the output of the subtraction unit 35, i.e., the buffer use amount minus the reading amount to the buffer use amount register 37.

The buffer use amount register 37 is a register that stores the use amount of the reception buffer 31. The buffer use amount register 37 is used with the advance reservation amount register 41 to predict an overflow of the reception buffer 31.

If the addition unit 38 receives the data transmission announcement signal from the data transmission apparatus 2, the addition unit 38 reads an advance reservation amount from the advance reservation amount 41. The addition unit 38 adds a maximum packet length to the advance reservation amount and outputs the result to the selection unit 40. As employed herein, the advance reservation amount refers to the use amount of the reception buffer 31 to be reserved in advance to store an unreceived packet or packets among the packets of which the data transmission announcement signal is received from the data transmission apparatus 2.

While the maximum packet length is used as the advance reservation amount for each packet, other amounts such as an average packet length may be used as the amount of reservation for each packet. The data transmission apparatus 2 may transmit a packet length when transmitting the data transmission announcement signal.

If the subtraction unit 39 is notified by the reception unit 32 of the reception of a packet, the subtraction unit 39 reads the advance reservation amount from the advance reservation amount register 41. The subtraction unit 39 subtracts the maximum packet length from the advance reservation amount and outputs the result to the selection unit 40. In other words, when a packet is received, the subtraction unit 39 cancels the use amount reserved in advance.

If the selection unit 40 receives the data transmission announcement signal from the data transmission apparatus 2, the selection unit 40 writes the output of the addition unit 38, i.e., the advance reservation amount plus the maximum packet length to the advance reservation amount register 41. On the other hand, if the selection unit 40 is notified by the reception unit 32 of the reception of a packet, the selection unit 40 writes the output of the subtraction unit 39, i.e., the advance reservation amount minus the maximum packet length to the advance reservation amount register 41.

The advance reservation amount resister 41 is a register that stores the advance reservation amount of the reception buffer 31. The advance reservation amount register 41 is used with the buffer use amount register 37 to predict an overflow of the reception buffer 31.

If the buffer use amount register 37 or the advance reservation amount register 41 is updated, the addition unit 42 reads the current buffer use amount from the buffer use amount register 37 and reads the current advance reservation amount from the advance reservation amount register 41. The addition unit 42 then adds the current buffer use amount and the current advance reservation amount to predict buffer use amount after receiving data that reserved but unreceived, and outputs the result of the addition to the stop notification unit 43.

The stop notification unit 43 compares the result of the addition of the current buffer use amount and the current advance reservation amount with a predetermined threshold. If the predetermined threshold is exceeded, the stop notification unit 43 determines that the reception buffer 31 can overflow, and transmits the data transmission stop signal for giving an instruction to stop data transmission to the data transmission apparatus 2.

The stop notification unit 43 transmits the data transmission stop signal to the data transmission apparatus 2 if the result of the addition of the current buffer use amount and the current advance reservation amount exceeds the predetermined value. This can prevent the reception buffer 31 from overflowing.

When the stop notification unit 43 compares the result of the addition of the current buffer use amount and the current advance reservation amount with the predetermined threshold, the result of the addition may change from a state of exceeding the predetermined threshold to a state of not exceeding the predetermined threshold. In such a case, the stop notification unit 43 determines that there is no possibility of overflow of the reception buffer 31, and cancels the data transmission stop signal.

The stop notification unit 43 cancels the data transmission stop signal if the result of the addition of the current buffer use amount and the current advance reservation amount changes from the state of exceeding the predetermined threshold to the state of not exceeding the predetermined threshold. This enables the data transmission apparatus 2 to resume data transmission.

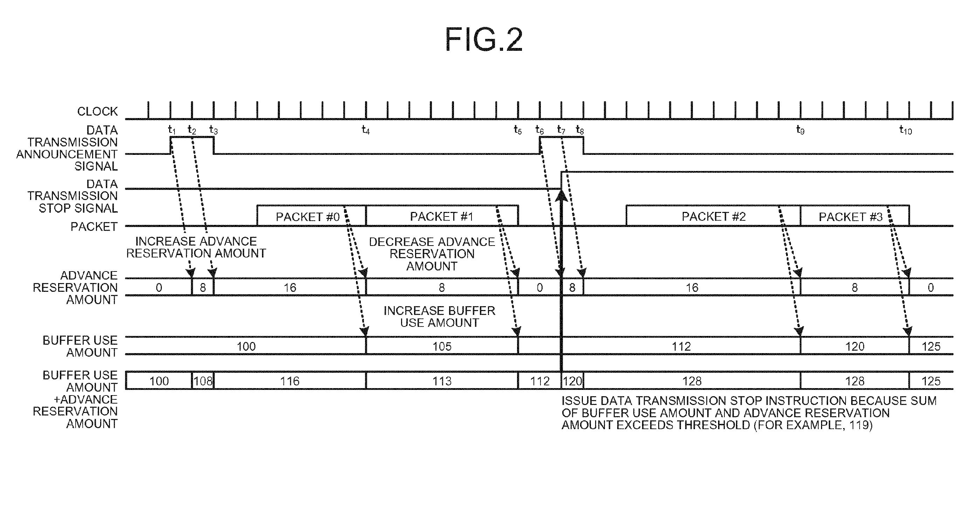

Next, timing when the data reception apparatus 3 issues a data transmission stop instruction will be described. FIG. 2 is a timing chart when the data reception apparatus 3 issues a data transmission stop instruction. Suppose that in FIG. 2, the advance reservation amount of the reception buffer 31 is 0 and the buffer use amount is 100.

As illustrated in FIG. 2, at timing t₁, the announcement unit 25 transmits the data transmission announcement signal. The advance reservation amount increases from 0 to 8. Here, the maximum packet length is 8. The sum of the buffer use amount and the advance reservation amount increases from 100 to 108.

At timing t₂, the announcement unit 25 transmits the data transmission announcement signal about the next packet. The advance reservation amount increases from 8 to 16. The sum of the buffer use amount and the advance reservation amount increases from 108 to 116.

At timing t₃, the announcement unit 25 stops transmitting the data transmission announcement signal. Then, at timing t₄, the data reception apparatus 3 receives packet #0 having a packet length of 5. The advance reservation amount decreases from 16 to 8, and the buffer use amount increases from 100 to 105. As a result, the sum of the buffer use amount and the advance reservation amount decreases from 116 to 113.

At timing t₅, the data reception apparatus 3 receives packet #1 having a packet length of 7. The advance reservation amount decreases from 8 to 0, and the buffer use amount increases from 105 to 112. As a result, the sum of the buffer use amount and the advance reservation amount decreases from 113 to 112.

At timing t₆, the announcement unit 25 transmits the data transmission announcement signal. The advance reservation amount increases from 0 to 8, and the sum of the buffer use amount and the advance reservation amount increases from 112 to 120. Suppose that the predetermined threshold is 119. Since the sum of the buffer use amount and the advance reservation amount exceeds the predetermined threshold, the stop notification unit 43 transmits the data transmission stop signal to the data transmission apparatus 2 at timing t₇.

At timing t₇, the announcement unit 25 transmits the data transmission announcement signal about the next packet. The advance reservation amount increases from 8 to 16. The sum of the buffer use amount and the advance reservation amount increases from 120 to 128. At timing t₈, the announcement unit 25 stops transmitting the data transmission announcement signal.

At timing t₉, the data reception apparatus 3 receives packet #2 having a packet length of 8. The advance reservation amount decreases from 16 to 8, and the buffer use amount increases from 112 to 120. As a result, the sum of the buffer use amount and the advance reservation amount remains at 128.

At timing t₁₀, the data reception apparatus 3 receives packet #3 having a packet length of 5. The advance reservation amount decreases from 8 to 0, and the buffer use amount increases from 120 to 125. As a result, the sum of the buffer use amount and the advance reservation amount decreases from 128 to 125.

In such a manner, the stop notification unit 43 transmits the data transmission stop signal to the data transmission apparatus 2 if the sum of the buffer use amount and the advance reservation amount exceeds the predetermined threshold. The reception buffer 31 can thus be prevented from overflowing.

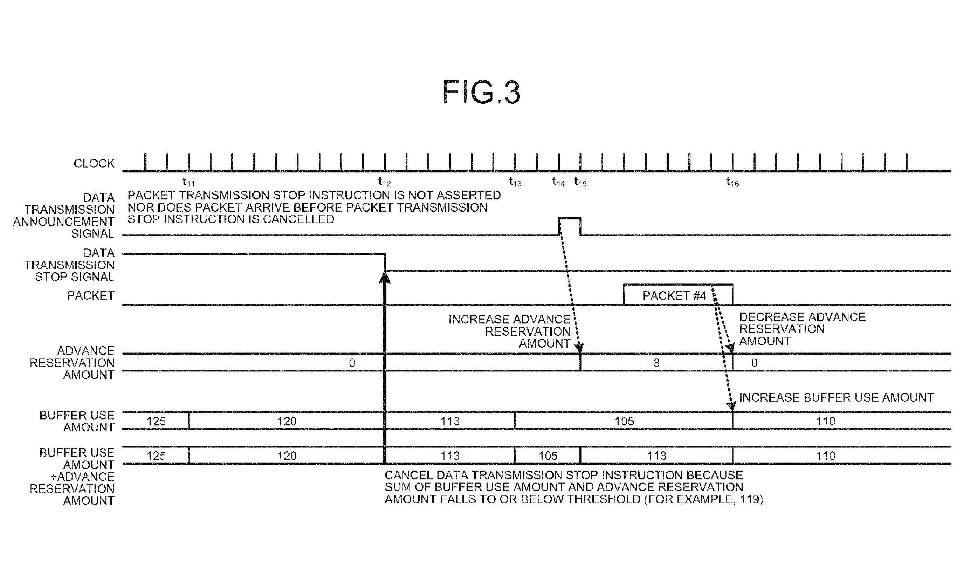

Next, timing when the data reception apparatus 3 cancels the data transmission stop instruction will be described. FIG. 3 is a timing chart when the data reception apparatus 3 cancels the data transmission stop instruction. Suppose that in FIG. 3, the advance reservation amount of the reception buffer 31 is 0 and the buffer use amount is 125.

As illustrated in FIG. 3, at timing t₁₁, data is read from the reception buffer 31. The buffer use amount decreases from 125 to 120, and the sum of the buffer use amount and the advance reservation amount also decreases from 125 to 120.

At timing t₁₂, data is read from the reception buffer 31. The buffer use amount decreases from 120 to 113, and the sum of the buffer use amount and the advance reservation amount also decreases from 120 to 113. Since the sum of the buffer use amount and the advance reservation amount has changed from the state of exceeding the threshold of 199 to the state of not exceeding the threshold, the stop notification unit 43 cancels the data transmission stop signal.

At timing t₁₃, data is read from the reception buffer 31. The buffer use amount decreases from 113 to 105, and the sum of the buffer use amount and the advance reservation amount also decreases from 113 to 105.

At timing t₁₄, the announcement unit 25 transmits the data transmission announcement signal. The advance reservation amount increases from 0 to 8, and the sum of the buffer use amount and the advance reservation amount increases from 105 to 113. At timing t₁₅, the announcement unit 25 stops transmitting the data transmission announcement signal.

At timing t₁₆, the data reception apparatus 3 receives packet #4 having a packet length of 5. The advance reservation amount decreases 8 to 0, and the buffer use amount increases from 105 to 110. As a result, the sum of the buffer use amount and the advance reservation amount decreases from 113 to 110.

In such a manner, if the sum of the buffer use amount and the advance reservation amount changes from the state of exceeding the threshold to the state of not exceeding the threshold, the stop notification unit 43 cancels the data transmission stop signal. The data transmission apparatus 2 can thus resume data transmission.

As has been described above, in the embodiment, if at least part of data is written to the transmission buffer 21 of the data transmission apparatus 2, the announcement unit 25 transmits the data transmission announcement signal to the data reception apparatus 3. The selection unit 40 of the data reception apparatus 3 receives the data transmission announcement signal, and updates the advance reservation amount register 41 with the advance reservation amount to which the maximum packet length is added by the addition unit 38.

The addition unit 42 reads the buffer use amount from the buffer use amount register 37, reads the advance reservation amount from the advance reservation amount register 41, and adds the buffer use amount and the advance reservation amount. The stop notification unit 43 compares the result of the addition of the buffer use amount and the advance reservation amount with the predetermined threshold. If the predetermined threshold is exceeded, the stop notification unit 43 transmits the data transmission stop signal to the data transmission apparatus 2.

Consequently, the data reception apparatus 3 can prevent the reception buffer 31 from overflowing. This can eliminate the need for the data reception apparatus 3 to request data retransmission from the data transmission apparatus 2.

In the embodiment, when the reading unit 33 reads data from the reception buffer 31, the subtraction unit 35 reads the buffer use amount from the buffer use amount register 37 and subtracts the reading amount from the buffer use amount. The addition unit 42 reads the buffer use amount from the buffer use amount register 37, reads the advance reservation amount from the advance reservation amount register 41, and adds the buffer use amount and the advance reservation amount.

The stop notification unit 43 compares the result of the addition of the buffer use amount and the advance reservation amount with the predetermined threshold. If the result of the addition changes from the state of exceeding the predetermined threshold to the state of not exceeding the predetermined threshold, the stop notification unit 43 cancels the data transmission stop signal. The data transmission apparatus 2 can thus resume data transmission.

The present embodiment has dealt with the case where data is transmitted in the form of packets. However, the present invention is not limited thereto, and may be similarly applied to cases where data is transmitted in other modes.

According to the embodiment, a buffer overflow can be prevented to eliminate the need for data retransmission.

## Claims

1. A data reception apparatus (3) comprising:
a reception unit (32) that receives a transmission announcement announcing transmission of data from a data transmission apparatus (2) that transmits data;
a calculation unit (42) that, when the transmission announcement is received by the reception unit (32), calculates a predicted use amount of a reception buffer (31) that stores reception data, on the basis of a current use amount of the reception buffer (31) and an advance reservation amount indicating an amount of unreceived data among the data of which the transmission announcement is received;
a determination unit (43) that determines whether the predicted use amount calculated by the calculation unit (42) exceeds a predetermined threshold; and
a notification unit (43) that, when the determination unit (43) determines that the predicted use amount exceeds the predetermined threshold, notifies the data transmission apparatus (2) of a stop of data transmission.

2. The data reception apparatus (3) according to claim 1, further comprising:
a first update unit (40) that updates the advance reservation amount on the basis of the transmission announcement and reception of the data announced by the transmission announcement; and
a second update unit (36) that updates the current use amount of the reception buffer (31) based on reading of data from reception buffer (31) and the reception of the data announced by the transmission announcement, wherein
the calculation unit (42) calculates the predicted use amount on the basis of the advance reservation amount updated by the first update unit (40) and the current use amount updated by the second update unit (36).

3. The data reception apparatus (3) according to claim 2, wherein:
when data is read from the reception buffer (31) and the current use amount is updated by the second update unit (36), the determination unit (43) further determines whether the predicted use amount has changed from a state of exceeding the predetermined threshold to a state of not exceeding the predetermined threshold; and
when the determination unit (43) determines that the predicted use amount has changed from the state of exceeding the predetermined threshold to the state of not exceeding the predetermined threshold, the notification unit (43) notifies the data transmission apparatus (2) of cancellation of the stop.

4. The data reception apparatus (3) according to claim 2 or 3, wherein the first update unit (40) updates the advance reservation amount by adding a maximum data length thereto.

5. A method for controlling a data reception apparatus (2), the method comprising:
when the transmission announcement announcing transmission of data is received, calculating a predicted use amount of a reception buffer (31) that stores reception data, on the basis of a current use amount of the reception buffer (31) and an advance reservation amount indicating an amount of unreceived data among the data of which the transmission announcement is received; and
when the predicted use amount is determined to exceed the predetermined threshold, notifying a data transmission apparatus (2) that transmits data of a stop of data transmission.

6. A data transmission and reception system (1) comprising a data transmission apparatus (2) that transmits data and a data reception apparatus (3) that receives the data transmitted by the data transmission apparatus (2),
the data transmission apparatus (2) including
a notification unit (25) that notifies the data reception apparatus (3) of a transmission announcement of data before transmitting the data, and
a transmission unit (23) that transmits the data of which the transmission announcement is notified by the notification unit (25),
the data reception apparatus (3) including
a reception unit (32) that receives the transmission announcement,
a calculation unit (42) that, when the transmission announcement is received by the reception unit (32), calculates a predicted use amount of a reception buffer (31) that stores reception data, on the basis of a current use amount of the reception buffer (31) and an advance reservation amount indicating an amount of unreceived data among the data of which the transmission announcement is received,
a determination unit (43) that determines whether the predicted use amount calculated by the calculation unit (42) exceeds a predetermined threshold, and
a notification unit (43) that, when the determination unit (43) determines that the predicted use amount exceeds the predetermined threshold, notifies the data transmission apparatus (2) of a stop of data transmission.
